(19) Europäisches Patentamt
European Patent Office
Office européen des brevets

(11) Publication number: **0 304 958 B1**

(12) **EUROPEAN PATENT SPECIFICATION**

(45) Date of publication of patent specification: **13.04.94**

(51) Int. Cl.[5]: **C08K 5/54**, C08L 83/04

(21) Application number: **88114062.8**

(22) Date of filing: **29.08.88**

(54) **Room temperature-curable organopolysiloxane composition.**

(30) Priority: **28.08.87 JP 214916/87**

(43) Date of publication of application:
**01.03.89 Bulletin 89/09**

(45) Publication of the grant of the patent:
**13.04.94 Bulletin 94/15**

(84) Designated Contracting States:
**BE DE FR GB**

(56) References cited:
**EP-A- 0 178 751**
**EP-A- 0 221 644**
**GB-A- 2 067 212**
**US-A- 3 816 164**

(73) Proprietor: **TORAY SILICONE COMPANY, LIMITED**
**2-3-16, Muro-machi**
**Nihonbashi**
**Chuo-ku Tokyo 103(JP)**

(72) Inventor: **Fukayama, Miyoji**
**6, 1-chome Yushudai Nish**
**Ichihara-shi Chiba Prefecture(JP)**
Inventor: **Hirashima, Hiroshi**
**6, 1-chome Yushudai Nish**
**Ichihara-shi Chiba Prefecture(JP)**

(74) Representative: **Spott, Gottfried, Dr. et al**
**Patentanwälte Spott und Puschmann**
**Sendlinger-Tor-Platz 11**
**D-80336 München (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 304 958 B1

## Description

The present invention relates to a room temperature-curable organopolysiloxane, and, more specifically, relates to a room temperature-curable organopolysiloxane composition which not only has an excellent adhesiveness for various materials, for example, glasses, plastics, metals, etc., but which also presents little decline in performance when challenged by severe environments, for example, immersion in hot water.

Adhesive organopolysiloxane compositions consisting of hydroxyl-terminated organopolysiloxane, alkoxysilane and aminoalkylalkoxysilane, and curing catalyst are already known. However, the silicone rubbers generated by the curing of these compositions have a poor water resistance, and, in particular, suffer from a decline in bonding strength and rubber properties when confronted with severe environments, such as immersion in hot water.

The present inventors achieved the present invention as a result of intensive research directed at solving these problems.

The present invention has as its object the introduction of a room temperature-curable organopolysiloxane composition which exhibits good adhesion for various materials e.g., glasses, plastics, and metals, which has an excellent water resistance after curing, and which affords a silicone rubber which retains its bonding strength and suffers from almost no decline in rubber properties even in the face of severe environments for example, immersion in hot water.

The present invention relates a room temperature-curable organopolysiloxane composition comprising (A) 100 parts by weight of polydiorganosiloxane with terminal hydroxyl groups or alkoxy groups and with a viscosity in the range of 20 to 1,000,000 $mm^2/s$ (centistokes) at 25 degrees Centigrade, (B) 0.5 to 15 weight parts disilaalkane compound having the following general formula

$$(R^2O)_{3-a}\overset{\overset{\displaystyle R^1_a}{|}}{Si} - R^3 - \overset{\overset{\displaystyle R^4_b}{|}}{Si}(OR^5)_{3-b}$$

in the formula, $R^1$ and $R^4$ are monovalent hydrocarbon groups, $R^2$ and $R^5$ are alkyl groups or alkoxylated alkyl groups, $R^3$ is an unsubstituted or substituted divalent hydrocarbon group, and <u>a</u> and <u>b</u> are zero or one, and (C) 0.1 to 10 weight parts of the reaction mixture obtained from reacting at a temperature of from 20 to 50 °C (a) aminoalkylalkoxysilane with the following general formula

$$Z\overset{\overset{\displaystyle H}{|}}{N}-R^3-\overset{\overset{\displaystyle R^1_a}{|}}{Si}(OR^2)_{3-a}$$

in the formula, Z is the hydrogen atom or an aminoalkyl group, and $R^1$, $R^2$, $R^3$, and <u>a</u> are defined as above with (b) epoxyalkylalkoxysilane with the following general formula

$$Q - R^3 - \overset{\overset{\displaystyle R^1_a}{|}}{Si}(OR^2)_{3-a}$$

in the formula, Q is the glycidoxy group or epoxycyclohexyl group, and $R^1$, $R^2$, $R^3$, and <u>a</u> are defined as above, wherein the molar ratio of (a) and (b) is 1:1,5 to 1:5.

To explain the preceding, the polydiorganosiloxane comprising component (A) used in the present invention is the base polymer of the composition of the present invention, and its molecular chain terminals must be chain-stopped by the hydroxyl group or an alkoxy group, such as trimethoxysilyl group or methyldimethoxysilyl group. Furthermore, it must have a viscosity at 25 degrees Centigrade within the range of 20 to 1,000,000 $mm^2/s$ (centistokes) and preferably within the range of 100 to 100,000 $mm^2/s$ (centistokes). Because cured silicone rubber product with greater strength are obtained from compositions

which use higher molecular weight polymers, the most preferred viscosity is from 1,000 to 100,000 $mm^2/s$ (centistokes) at 25 degrees Centigrade. When the viscosity is too low, the rubber elasticity after curing is poor, while excessively high viscosities cause a reduced workability. In addition, it is preferred that its molecular configuration be essentially linear.

The organic groups present in this polydiorganosiloxane are exemplified by alkyl groups such as methyl, ethyl, propyl, butyl, and octyl; alkenyl groups such as vinyl and allyl; aryl groups such as phenyl and tolyl; benzyl; and substituted alkyl groups such as 3,3,3-trifluoropropyl and 3-chloropropyl. This organopolysiloxane is exemplified as follows:

polydimethylsiloxanes,
polymethylethylsiloxanes,
polymethyloctylsiloxanes,
polymethylvinylsiloxanes,
polymethylphenylsiloxanes,
polymethyl(3,3,3-trifluoropropyl)siloxanes,
dimethylsiloxane-methylphenylsiloxane copolymers,
and dimethylsiloxane-methyl(3,3,3-trifluoropropyl)-siloxane copolymers

The molecular chain terminals of these organopolysiloxanes are to be chain-stopped (endblocked) by the hydroxyl group or the alkoxy group. Examples of molecular chain terminals chain-stopped by the hydroxyl group are

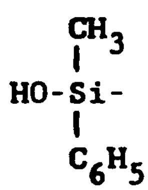 and 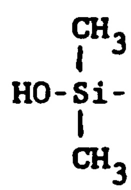

while examples of molecular chain terminals chain-stopped by the alkoxy group areas follows:

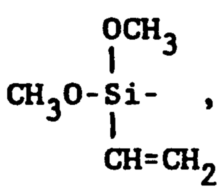 , 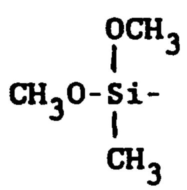 , 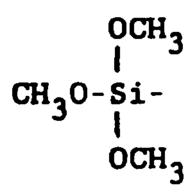 ,

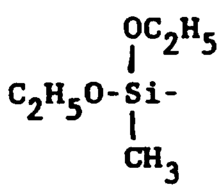 , and 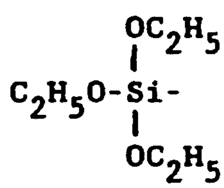 .

Component (B) is used in the present invention as a crosslinker for component (A), but also functions in combination with component (C), infra, to improve the adhesiveness of the composition of the present invention to various materials, and, in particular, to impart water resistance to the cured silicone rubber.

Component (B) is a disilaalkane compound with the above general formula. In said formula, $R^1$ and $R^4$ are monovalent hydrocarbon groups as exemplified by alkyl groups such as methyl, ethyl, and propyl; alkenyl groups such as vinyl and allyl; and aryl groups such as phenyl. $R^2$ and $R^5$ are alkyl groups such as methyl, ethyl, and propyl; or alkoxylated alkyl groups such as methoxyethyl. $R^3$ is a divalent hydrocarbon group as exemplified by alkylene groups such as ethylene, propylene, and butylene. Finally, a and b are zero or one.

Examples of component (B) are as follows:

1,1-bis(trimethoxysilyl)ethane,
1,2-bis(trimethoxysilyl)ethane,

1,2-bis(trimethoxysilyl)propane,
1,1-bis(methyldimethoxysilyl)ethane,
1,2-bis(triethoxysilyl)ethane,
1-trimethoxysilyl-2-methyldimethoxysilylethane,
1,3-bis(trimethoxyethoxysilyl)propane, and
1-dimethylmethoxysilyl-2-phenyldiethoxysilylethane.

Component (B) may be used as the single compound or in the form of a mixture of two or more compounds. Furthermore, in order to equip the cured silicone rubber with a low modulus rubber elasticity, a difunctional alkoxysilane, for example, diphenyldimethoxysilane or dimethyldimethoxysilane, etc., may also be added.

Component (B) is added at 0.5 to 15 parts by weight per 100 parts by weight of component (A). When the terminals of component (A) are chain-stopped by the hydroxyl group, it is preferred that the number of moles of alkoxy groups in component (B) exceed the number of moles of hydroxyl groups in component (A). Furthermore, when each terminal of component (A) is chain-stopped by only a single alkoxy group, component (B) is preferably added at 2 through 15 weight parts.

Component (C) used in the present invention functions as the component which endows the composition of the present invention with adhesiveness, that it, it functions as a so-called adhesion promoter. In addition, it functions to inhibit any decline in bonding strength after immersion in water or hot water. Component (C) comprises the reaction mixture obtained from an aminoalkylalkoxysilane having the following general formula (a)

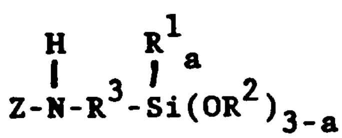

in the formula, Z is the hydrogen atom or an aminoalkyl group such as aminomethyl, aminoethyl, aminopropyl, aminobutyl, etc.; and $R^1$, $R^2$, $R^3$, and a are defined as above and an epoxyalkylalkoxysilane with the following general formula (b)

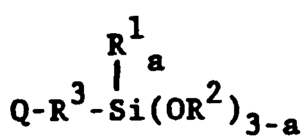

in the formula, Q is the glycidoxy group or epoxycyclohexyl group, and $R^1$, $R^2$, $R^3$, and a are defined as above. Examples of the aminoalkylalkoxysilane comprising component (a) are
aminomethyltriethoxysilane,
aminopropyltriethoxysilane,
aminopropylmethyldimethoxysilane,
N-(beta-aminoethyl)aminomethyltributoxysilane,
N-(beta-aminoethyl)aminopropyltrimethoxysilane,
N-(beta-aminoethyl)aminopropylmethyldimethoxysilane,
and anilinopropyltriethoxysilane.

Examples of the epoxyalkylalkoxysilane comprising component (b) are
gamma-glycidoxypropyltrimethoxysilane,
gamma-glycidoxypropylmethyldimethoxysilane,
3,4-epoxycyclohexylethyltrimethoxysilane, and
3,4-epoxycyclohexylethylmethyldimethoxysilane.

The reaction mixture of component (C) is readily obtained by placing the prescribed quantity of component (a) and the prescribed quantity of component (b) in a reactor and carrying out a reaction by mixing at room or elevated temperature. The ratio (molar) between component (a) and component (b) in this reaction should be 1:1.5 to 1:5 and preferably falls within the range of 1:2 to 1:4. The reaction temperature should be 20 to 50 degrees Centigrade and preferably is 15 to 40 degrees Centigrade. When the molar ratio falls outside the above range, the bonding strength in hot water immersion will decline. When the

reaction temperature exceeds 50 degrees Centigrade, the reaction mixture will gel, and it will become impossible to obtain good rubber properties.

Component (C) is to be added at 0.1 to 10 parts by weight and preferably at 0.5 to 5 parts by weight per 100 parts by weight component (A). A satisfactory adhesiveness will not be obtained when the addition of component (C) falls below 0.1 part by weight. Moreover, in excess of 10 parts by weight causes the curing rate to be slow and the cured silicone rubber to be excessively hard.

As necessary, curing of the composition of the present invention may be accelerated by the addition of a catalyst. Such catalysts comprise, among others, the tin, titanium, zirconium, iron, antimony, bismuth, and manganese salts of organic acids, as well as organotitanate esters and organotitanium chelates. Examples of useful catalysts are tin compounds such as dibutyltin dilaurate, dibutyltin dioctoate, stannous octoate, etc.; and titanium compounds such a tetrabutyl titanate, tetraisopropyl titanate, diisopropoxybis-(acetylacetonate)titanium, diisopropoxybis(ethyl acetoacetate)titanium, etc. Its quantity of addition preferably falls within the range of 0.001 to 5 parts by weight per 100 parts by weight component (A).

In order to bring about a further improvement in the adhesiveness of the composition of the present invention, it will be advantageous to add to the combination of components (A) through (C) an alkoxysilane having the general formula

$R^1{}_cSi(OR^2)_{4-c}$

in the formula, $R^1$ is a monovalent hydrocarbon group, $R^2$ is an alkyl group or an alkoxyalkyl groups and $\underline{c}$ has a value of zero or one.

This alkoxysilane is exemplified by tetrafunctional alkoxysilanes such as tetramethoxysilane, tetraethoxysilane, methyl Cellosolve orthosilicate, n-propyl orthosilicate, etc.; trifunctional alkoxysilanes such as methyltrimethoxysilane, methyltriethoxysilane, ethyltrimethoxysilane, vinyltrimethoxysilane, phenyltrimethoxysilane, methyltri(methoxyethoxy)silane, etc.; and the partial hydrolysis condensates of the preceding.

Other than the above components (A) through (C), catalyst, and alkoxysilane, the composition of the present invention may as necessary also contain a microparticulate inorganic filler for the purposes of adjusting the fluidity prior to curing and improving the physical properties of the cured product. Such a filler is added within the range of 1 to 200 parts by weight and preferably 5 to 100 parts by weight for each 100 parts by weight component (A). This inorganic filler is exemplified by dry-method silicas, wet-method silicas, microparticulate quartz, calcium carbonate, titanium dioxide, diatomaceous earth, aluminum hydroxide, microparticulate alumina, magnesia, zinc oxide, zinc carbonate, and such fillers whose surfaces have been treated with, for example, silanes, silazanes, polysiloxanes having low degrees of polymerization, organic compounds, etc.

Furthermore, as long as the object of the present invention is not adversely impacted, the composition of the present invention may also contain organic solvents, polydiorganosiloxane with trimethylsilylated terminals, heat stabilizers, plasticizers, thixotropy agents, general adhesion promoters, antimolds, etc.

The composition of the present invention may be used in the form of the single package as prepared by the advance mixing of the respectively required quantities of components (A), (B), and (C). Or, the respectively required quantities of components (B) and (C) can be mixed in advance and packaged separately from component (A) (the so-called two-package execution), and the two are then mixed directly before use. Furthermore, it will also be possible to package the required quantities of components (A), (B), and (C) separately in a so-called three-package execution, and the three components are then mixed directly before use. No particular restriction applies to the mixture combinations of components (A), (B), and (C).

The composition of the present invention as described above adheres well to glasses; ceramics; metals such as aluminum, copper, stainless steel, iron, galvanization tin plate, brass, zinc, etc.; organic resins such as epoxy resins, phenolic resins, polycarbonates, polyesters, ABS, nylons, vinyl chloride, etc.; mortar; concrete; wood; etc.

With respect to its service, the composition of the present invention may be used as a construction sealant or coating; as an adhesive, sealant, or coating for electric/electronic components; and as an adhesive for glass, plastic, and metal products.

The present invention will be explained below with reference to illustrative examples which are not limiting and is properly delineated in the claims. In the examples, parts = parts by weight in all cases, and the viscosity is the value measured at 25 degrees Centigrade. The following abbreviations are used in the examples.

Me: methyl
Emax: elongation at maximum load

M50: 50% tensile stress
Tmax: maximum tensile stress
CF: cohesive fracture
AF: adhesive fracture

REFERENCE EXAMPLE 1

220 g gamma-aminopropyltriethoxysilane (I) and 500 g gamma-glycidoxypropyltrimethoxysilane (II) {I:II (molar) = 1:2.2} were mixed to homogeneity. Standing for 7 days at room temperature under seal afforded a reaction mixture having a viscosity of 170 $mm^2/s$ (centistokes)(adhesion promoter A)

REFERENCE EXAMPLE 2

222 g N-(beta-aminoethyl)-gamma-aminopropyltrimethoxysilane (III) and 708 g gamma-glycidoxypropyltrimethoxysilane (II) {III:II (molar) = 1: 3.0} were mixed to homogeneity. Standing for 3 days at room temperature under seal afforded a reaction mixture having a viscosity of 210 $mm^2/s$ (centistokes) (adhesion promoter B).

EXAMPLE 1

100 Parts polydimethylsiloxane chain-stopped at both molecular chain terminals with the hydroxyl group (viscosity = 12,000 $mm^2/s$ (centistokes)) and 100 parts aliphatic acid-treated calcium carbonate having an average particle diameter of 0.08 µm (microns) were mixed to homogeneity to afford a mixture denoted in the following as base 1.

In addition, N-propyl orthosilicate, (MeO)3SiCH2CH2Si(OMe)3, adhesion promoter A as prepared in Reference Example 1, and dibutyltin dilaurate were mixed in the proportions given in Table 1 (the obtained mixture is denoted as the "catalyst" in the following).

A room temperature-curable organopolysiloxane composition was prepared by mixing base 1 and the catalyst in a 100:5 weight ratio. This composition was then used to prepare an H-type butt joint based on JIS A-5758 (adherend: glass plate). The specimen was cured by standing at room temperature for 7 days followed by maintenance at 50 degrees Centigrade for 7 days, and its tensile adhesion strength was then measured. The tensile adhesion strength was also measured after an additional 7 days immersion in hot water (80 degrees Centigrade). These results are reported in Table 2.

For comparison, room temperature-curable organopolysiloxane compositions were also prepared as above using the catalysts reported in Table 1. These were tested for their tensile adhesion strengths as above, and these results are also reported in Table 2.

EXAMPLE 2

A catalyst composition was prepared by mixing 70 parts (MeO)3SiCH2CH2Si(OMe)3, 30 parts adhesion promoter A, and 1 part dibutyltin dilaurate to homogeneity.

A room temperature-curable organopolysiloxane composition was then prepared by mixing the base 1 prepared in Example 1 and this catalyst composition in a 100:5 weight ratio. The obtained composition was tested as in Example 1, and the obtained results are reported in Table 3.

EXAMPLE 3

A base 2 was prepared by mixing the following to homogeneity: 100 parts polydimethylsiloxane chain-stopped at both molecular chain terminals with the hydroxyl group and having a viscosity of 50,000 $mm^2/s$ (centistokes), 60 parts aliphatic acid-treated calcium carbonate with an average particle diameter of 0.08 microns, 10 parts fumed silica with a hexamethyldisilazane-treated surface (specific surface area = 200 $m^2/g$),and 2 parts dimethylpolysiloxane chain-stopped by the hydroxyl group at both terminals and having a viscosity of 40 $mm^2/s$ (centistokes).

A catalyst composition was also prepared from 60 parts n-propyl orthosilicate, 10 parts

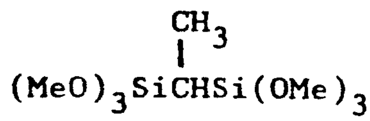

30 parts adhesion promoter B as prepared in Reference Example 2, and 1 part dibutyltin dilaurate. Base 2 and this catalyst composition were then mixed at 100:5 (weight ratio), and this was measured as in Example 1: these results are reported in Table 4.

EXAMPLE 4

100 Parts polydiorganosiloxane chain-stopped at both molecular chain terminals with the methyldimethoxysilyl group and 100 parts aliphatic acid-treated calcium carbonate with an average particle diameter of 0.08 µm (microns) were mixed to homogeneity to afford a composition. 2 Parts MeSi(OMe)3, 2 parts (MeO)3SiCH2CH2Si(OMe)3, 1 part adhesion promoter A as prepared in Reference Example 1, and 1 part diisopropoxybis(ethylacetoacetate)titanium were added to the composition obtained as above, and this was then mixed to homogeneity with the exclusion of moisture.

The obtained composition was then tested for its tensile adhesion as in Example 1, with the modification that the curing conditions in the present case were 14 days at room temperature plus 14 days at 30 degrees Centigrade. These results are reported in Table 5.

Because the present invention's room temperature-curable organopolysiloxane composition comprises components (A) through (C), and in particular because the crosslinker comprising component (B) is a specific disilaalkane compound and the adhesion promoter comprising component (C) is a specific alkylalkoxysilane reaction mixture, this composition characteristically exhibits an excellent adhesion for various materials (e.g., glasses, plastics, metals, etc.) in contact with it during curing, and, after curing, has an excellent water resistance and retains its bonding strength even in the face of severe environments, for example, immersion in hot water, without a deterioration in rubber properties.

Table 1.

| catalyst components | | Example 1 | Comparison Example 1 | Comparison Example 2 | Comparison Example 3 |
|---|---|---|---|---|---|
| n-propyl orthosilicate | (parts) | 60 | 70 | 70 | 70 |
| $(MeO)_3SiCH_2CH_2Si(OMe)_3$ | (parts) | 10 | — | — | — |
| dibutyltin dilaurate | (parts) | 1 | 1 | 1 | 1 |
| adhesion promoter A | (parts) | 30 | — | — | 30 |
| gamma-aminopropyl-triethoxysilane | (parts) | — | 30 | — | — |
| gamma-glycidoxypropyl-trimethoxysilane | (parts) | — | — | 30 | — |

Table 2.

| | initial | | | | after immersion in 80°C water | | | |
|---|---|---|---|---|---|---|---|---|
| | $M_{50}$ kg/cm$^2$ | $T_{max}$ kg/cm$^2$ | $E_{max}$ % | fracture condition | $M_{50}$ kg/cm$^2$ | $T_{max}$ kg/cm$^2$ | $E_{max}$ % | fracture condition |
| Example 1 | 7.0 | 10.0 | 140 | CF | 5.0 | 8.0 | 150 | CF |
| Comparison Example 1 | 9.0 | 11.5 | 70 | CF | 1.0 | 2.4 | 50 | CF |
| Comparison Example 2 | 10.0 | 11.9 | 75 | CF | 2.5 | 4.2 | 120 | CF |
| Comparison Example 3 | 6.5 | 9.0 | 130 | CF | 3.2 | 5.4 | 180 | CF |

Table 3

| initial | | | | after immersion in 80 °C water | | | |
|---|---|---|---|---|---|---|---|
| $M_{50}$ kg/cm$^2$ | $T_{max}$ kg/cm$^2$ | $E_{max}$ % | fracture condition | $M_{50}$ kg/cm$^2$ | $T_{max}$ kg/cm$^2$ | $E_{max}$ % | fracture condition |
| 5.6 | 8.3 | 130 | CF | 5.3 | 10.7 | 170 | CF |

Table 4

| initial | | | | after immersion in 80 °C water | | | |
|---|---|---|---|---|---|---|---|
| $M_{50}$ kg/cm$^2$ | $T_{max}$ kg/cm$^2$ | $E_{max}$ % | fracture condition | $M_{50}$ kg/cm$^2$ | $T_{max}$ kg/cm$^2$ | $E_{max}$ % | fracture condition |
| 9.2 | 16.2 | 170 | CF | 8.1 | 13.5 | 210 | CF |

Table 5

| initial | | | | after immersion in 80 °C water | | | |
|---|---|---|---|---|---|---|---|
| $M_{50}$ kg/cm$^2$ | $T_{max}$ kg/cm$^2$ | $E_{max}$ % | fracture condition | $M_{50}$ kg/cm$^2$ | $T_{max}$ kg/cm$^2$ | $E_{max}$ % | fracture condition |
| 8.8 | 10.1 | 70 | CF | 8.0 | 9.1 | 100 | CF |

## Claims

**1.** A room temperature-curable organopolysiloxane composition comprising

(A) 100 parts by weight of polydiorganosiloxane with terminal hydroxyl groups or alkoxy groups and with a viscosity in the range of 20 to 1,000,000 mm²/s (centistokes) at 25 degrees Centigrade,

(B) 0.5 to 15 weight parts disilaalkane compound having the following general formula

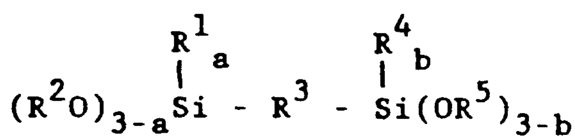

in the formula, $R^1$ and $R^4$ are monovalent hydrocarbon groups, $R^2$ and $R^5$ are alkyl groups or alkoxylated alkyl groups, $R^3$ is an unsubstituted or substituted divalent hydrocarbon group, and a and b are zero or one, and

(C) 0.1 to 10 weight parts of the reaction mixture obtained from reacting at a temperature of 20-50 °C

(a) aminoalkylalkoxysilane with the following general formula

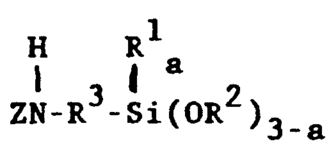

in the formula, Z is the hydrogen atom or an aminoalkyl group, and $R^1$, $R^2$, $R^3$, and a are defined as above with

(b) epoxyalkylalkoxysilane with the following general formula

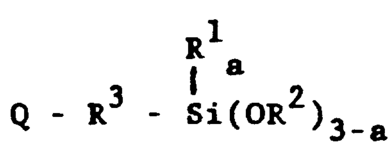

in the formula, Q is the glycidoxy group or epoxycyclohexyl group, and $R^1$, $R^2$, $R^3$, and a are

defined as above, wherein the molar ratio of (a) and (b) is 1:1,5 to 1:5

**2.** The room temperature-curable organopolysiloxane composition as described in claim 1 further comprising 0.5 to 15 parts by weight alkoxysilane of the following general formula

$R^1_cSi(OR^2)_{4-c}$

in the formula, $R^1$ is a monovalent hydrocarbon group, $R^2$ is an alkyl group or alkoxylated alkyl group, and c is zero or one.

**3.** The room temperature-curable organopolysiloxane composition according to claim 1 further comprising a catalyst in an amount sufficient to accelerate the curing reaction of components (A) through (C).

**4.** The room temperature-curable organopolysiloxane composition according to claim 2 further comprising a catalyst in an amount sufficient to accelerate the curing reaction of components (A) through (C).

**5.** The room temperature-curable organopolysiloxane composition according to claim 3 in which the polydiorganosiloxane of (A) is polydimethylsiloxane having a viscosity of from 100 to 100,000 $mm^2/s$ at 25 degrees Centigrade, (C) is present in an amount of from 0.5 to 5 parts by weight, the catalyst is present in an amount of from 0.001 to 5 parts by weight, and the composition further comprises a filler in an amount of from 1 to 200 parts by weight.

**6.** The room temperature-curable organopolysiloxane composition according to claim 4 in which the polydiorganosiloxane of (A) is polydimethylsiloxane having a viscosity of from 100 to 100,000 $mm^2/s$ at 25 degrees Centigrade, (C) is present in an amount of from 0.5 to 5 parts by weight, the catalyst is present in an amount of from 0.001 to 5 parts by weight, the alkoxysilane is present in an amount of from 0.5 to 10 parts by weight, and further comprising a filler in an amount of 1 to 200 parts by weight.

**Patentansprüche**

**1.** Bei Raumtemperatur härtbare Organopolysiloxanzusammensetzung umfassend (A) 100 Gewichtsteile Polydiorganosiloxan mit endständigen Hydroxylgruppen oder Alkoxygruppen und einer Viskosität im Bereich von 20 bis 1 000 000 $mm^2/s$ (Centistokes) bei 25 °C, (B) 0,5 bis 15 Gewichtsteile einer Disilaalkanverbindung mit der folgenden allgemeinen Formel

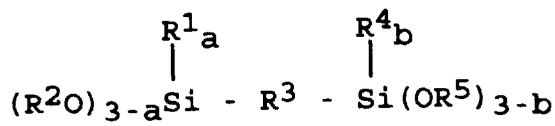

worin $R^1$ und $R^4$ monovalente Kohlenwasserstoffgruppen sind, $R^2$ und $R^5$ Alkylgruppen oder alkoxylierte Alkylgruppen sind, $R^3$ eine unsubstituierte oder substituierte divalente Kohlenwasserstoffgruppe ist und a und b 0 oder 1 sind und (C) 0,1 bis 10 Gewichtsteile der Reaktionsmischung, die erhalten wird, wenn man bei einer Temperatur von 20 bis 50 °C (a) Aminoalkylalkoxysilan der folgenden allgemeinen Formel

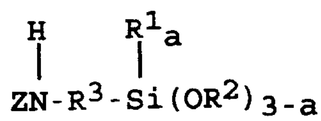

worin Z das Wasserstoffatom oder eine Aminoalkylgruppe ist und $R^1$, $R^2$, $R^3$ und a wie oben definiert sind mit (b) einem Epoxyalkylalkoxysilan der folgenden allgemeinen Formel

$$Q - R^3 - \overset{\overset{\displaystyle R^1{}_a}{|}}{Si}(OR^2)_{3-a}$$

worin Q die Glycidoxygruppe oder die Epoxycyclohexylgruppe ist und $R^1$, $R^2$, $R^3$ und a wie oben definiert sind, umsetzt, wobei das molare Verhältnis von (a) zu (b) 1:1,5 bis 1:5 ist.

2. Bei Raumtemperatur härtbare Organopolysiloxanzusammensetzung nach Anspruch 1, weiter umfassend 0,5 bis 15 Gewichtsteile eines Alkoxysilans der folgenden allgemeinen Formel

$R^1{}_cSi(OR^2)_{4-c}$

worin $R^1$ eine monovalente Kohlenwasserstoffgruppe ist, $R^2$ eine Alkylgruppe oder alkoxylierte Alkylgruppe ist und c 0 oder 1 ist.

3. Bei Raumtemperatur härtbare Organopolysiloxanzusammensetzung nach Anspruch 1, weiter umfassend einen Katalysator in einer Menge, die ausreicht, um die Reaktion zwischen den Komponenten (A) bis (C) zu beschleunigen.

4. Bei Raumtemperatur härtbare Organopolysiloxanzusammensetzung nach Anspruch 2, weiter umfassend einen Katalysator in einer Menge, die ausreicht, um die Härtungsreaktion der Komponenten (A) bis (C) zu beschleunigen.

5. Bei Raumtemperatur härtbare Organopolysiloxanzusammensetzung nach Anspruch 3, worin das Polydiorganosiloxan von (A) Polydimethylsiloxan mit einer Viskosität von 100 bis 100 000 $mm^2/s$ bei 25 °C ist, (C) in einer Menge von 0,5 bis 5 Gewichtsteilen vorhanden ist, der Katalysator in einer Menge von 0,001 bis 5 Gewichtsteilen vorhanden ist und die Zusammensetzung weiterhin einen Füllstoff in einer Menge von 1 bis 200 Gewichtsteilen umfaßt.

6. Bei Raumtemperatur härtbare Organopolysiloxanzusammensetzung nach Anspruch 4, worin das Polydiorganosiloxan von (A) Polydimethylsiloxan mit einer Viskosität von 100 bis 100 000 $mm^2/s$ bei 25 °C ist, (C) in einer Menge von 0,5 bis 5 Gewichtsteilen vorhanden ist, der Katalysator in einer Menge von 0,001 bis 5 Gewichtsteilen vorhanden ist, das Alkoxysilan in einer Menge von 0,5 bis 10 Gewichtsteilen vorhanden ist und weiter umfassend einen Füllstoff in einer Menge von 1 bis 200 Gewichtsteilen.

**Revendications**

1. Composition d'organopolysiloxane réticulable à température ambiante comprenant :
   (A) 100 parties en poids de polydiorganosiloxane contenant des groupes terminaux hydroxyle ou alkoxy et présentant une viscosité comprise de 20 à 1 000 000 $mm^2/s$ (centistokes) à 25 °C,
   (B) de 0,5 à 15 parties en poids d'un composé disilaalcane ayant la formule générale suivante :

$$(R^2O)_{3-a}\overset{\overset{\displaystyle R^1{}_a}{|}}{Si} - R^3 - \overset{\overset{\displaystyle R^4{}_b}{|}}{Si}(OR^5)_{3-b}$$

   où dans la formule, $R^1$ et $R^4$ sont des groupes hydrocarbonés monovalents, $R^2$ et $R^5$ sont des groupes alkyles ou des groupes alkyles alkoxylés, $R^3$ est un groupe hydrocarboné divalent substitué ou non, et a et b sont zéro ou un, et
   (C) de 0,1 à 10 parties en poids du mélange réactionnel obtenu en faisant réagir à une température de 20 à 50 °C :

(a) un aminoalkylalkoxysilane ayant la formule générale suivante :

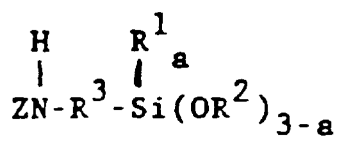

où dans la formule, Z est un atome d'hydrogène ou un groupe aminoalkyle, et $R^1$, $R^2$, $R^3$ et a sont tels que définis précédemment, avec

(b) un époxyalkylalkoxysilane ayant la formule générale suivante:

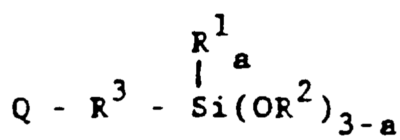

où dans la formule, Q est un groupe glycidoxy ou époxycyclohexyle, et $R^1$, $R^2$, $R^3$ et a sont tels que définis précédemment, et où le rapport molaire de (a) et (b) est de 1:1,5 à 1:5.

**2.** Composition d'organopolysiloxane réticulable à température ambiante telle que décrite dans la revendication 1, comprenant de plus de 0,5 à 15 parties en poids d'un alkoxysilane ayant la formule générale suivante:

$R^1_cSi(OR^2)_{4-c}$

où dans la formule, $R^1$ est un groupe hydrocarboné monovalent, $R^2$ est un groupe alkyle ou un groupe alkyle alkoxylé, et c est zéro ou un.

**3.** Composition d'organopolysiloxane réticulable à température ambiante selon la revendication 1, comprenant de plus un catalyseur en quantité suffisante pour accélérer la réaction de réticulation des composants (A) à (C).

**4.** Composition d'organopolysiloxane réticulable à température ambiante selon la revendication 2, comprenant de plus un catalyseur en quantité suffisante pour accélérer la réaction de réticulation des composants (A) à (C).

**5.** Composition d'organopolysiloxane réticulable à température ambiante selon la revendication 3, dans laquelle le polydiorganosiloxane de (A) est un polydiméthylsiloxane présentant une viscosité de 100 à 100 000 $mm^2/s$ à 25 °C, (C) est présent en une quantité de 0,5 à 5 parties en poids, le catalyseur est présent en une quantité de 0,001 à 5 parties en poids, et la composition comprend de plus une charge en une quantité de 1 à 200 parties en poids.

**6.** Composition d'organopolysiloxane réticulable à température ambiante selon la revendication 4, dans laquelle le polydiorganosiloxane de (A) est un polydiméthylsiloxane présentant une viscosité de 100 à 100 000 $mm^2/s$ à 25 °C, (C) est présent en une quantité de 0,5 à 5 parties en poids, le catalyseur est présent en une quantité de 0,001 à 5 parties en poids, l'alkoxysilane est présent en une quantité de 0,5 à 10 parties en poids et la composition comprend de plus une charge en une quantité de 1 à 200 parties en poids.